# EUROPEAN PATENT SPECIFICATION

(11) **EP 0 466 924 B1**
(45) Date of publication and mention of the grant of the patent: **03.01.1996**
(21) Application number: 90903213.8
(22) Date of filing: 15.02.1990
(51) Int. Cl.: B29D 30/48

(54) **METHOD OF STICKING BEAD APEXES AND APPARATUS THEREFOR**
VERFAHREN UND VORRICHTUNG ZUM ANHEFTEN VON WULSTSTREIFEN
PROCEDE ET APPAREIL DE COLLAGE DE JOINTES DE TALON

(43) Date of publication of application: 22.01.1992
(73) Proprietor: SUMITOMO RUBBER INDUSTRIES, CO. LTD, Chuo-ku Kobe-shi Hyogo-ken 651 (JP)
(72) Inventor: YASUNO, Osamu, 92800 Puteaux (FR); TSUKAMOTO, Kouji, Toyota-shi, Aichi 471 (JP); OKADA, Toshikazu, Toyokawa-shi, Aichi 442 (JP); TANAKA, Yukihisa, 7-chome, Toyota-shi, Aichi 471 (JP); NAKAJIMA, Yoshiaki, Nisikamo-gun, Aichi 470-04 (JP)
(74) Representative: Stewart, Charles Geoffrey
(86) International application number: PCT/JP90/00183
(87) International publication number: WO 91/12127

(56) References cited:
- EP-A- 0 196 521
- JP-A- 1 195 030
- JP-A- 5 488 979
- JP-A- 5 669 148
- JP-A- 6 490 736
- JP-A-57 152 937
- JP-A-60 259 436
- US-A- 1 759 669
- US-A- 1 944 768
- US-A- 4 196 036

## Description

This invention relates to a tyre bead applying method and apparatus. Such a component is used in manufacture of a pressure automobile tyre and is a rubber component having a relatively slender triangular cross-section, which is formed by extrusion and referred to as an "apex". It is applied to the outer peripheral surface of a bead ring prior to forming a bead portion of the tyre. The invention includes a method and apparatus which enable the application of a belt-shaped bead filler at the same time as the application of the apex.

As main prior art used for applying an apex to the outer peripheral surface of a bead ring, there are those described in the Japanese Patent Publication Gazette Nos. S51-29551 and S61-6782. The former in accordance with the preamble of claims 1 and 3 describes an apex fed from its one end onto a rotating bead ring suspended by a pair of guide rolls, successively pressed against the peripheral surface of the bead ring by a pair of pressing rolls and applied thereto in annular fashion. Thus the bead apex is pinched by a disc roll and a cone roll so as to spread from its inner edge toward its outer edge. The leading end of the apex is rotated by a predetermined angle and the rear end portion of the apex is cut to a predetermined length. Then both end portions of the apex which are engaged in a V-shape are clamped by a splicing mechanism and both cut end surfaces are drawn and bonded together after the apex is applied to the whole periphery of the bead ring.

In the latter, a bead ring is held on the periphery of a rotatable disc, an apex which is previously cut to a predetermined length is applied to the peripheral surface of the bead ring in annular fashion with rotation of the disc, both side portions of both cut ends of the apex are engaged by two pairs of clamps (pressing elements) in a state where both ends of the apex have a V-shaped gap therebetween, and a thrust force is applied to the clamps by a third mechanism, thereby pulling both V-shaped facing end portions of the apex into butting engagement.

When a bead apex having a relatively slender triangular cross-section is applied annularly to a bead ring, a V-shaped gap is inevitably formed at a junction of the leading and rear ends of the apex since there is a difference between the inner circumferential length of the apex, which is in contact with the peripheral surface of the bead ring, and the outer circumferential length thereof which is its outer edge portion (tip portion). According to the above-mentioned prior art, there are problems in that the apex may shrink especially in its outer edge portion after the time when it is drawn out to the time when its application to the peripheral surface of the bead ring is completed. This makes the V-shaped gap between both ends larger since both ends of the apex are clamped by clamping tools and drawn into a butting engagement after the apex is applied to the peripheral surface of the bead ring. The amount of deformation of the end portions of the apex to fill in the V-shaped gap is locally so significant that the shape of the outer edge of the apex is liable to become irregular in the vicinity of the junction and additionally clamp marks from the clamps may be left at the junction. The size of the V-shaped gap is not always fixed and some are large and others are small, since the degree of shrinkage varies with the viscosity of the apex rubber. When it is clamped for bonding by the above-mentioned prior art scissors-type clamping tools which have only a limited movement but do not give a free drawing movement directly responding to the size of the particular V-shaped gap, there is a problem in that an excessively large operational stroke of the clamping tools is often set in conformity with a large gap in order to avoid a misjoint. This may cause excessive joint pressure (excessive bond) for a smaller gap design. Alternatively a small operational stroke set to suit a small V-shaped gap may cause an insufficient movement to leave a gap in the junction in case of a larger gap., thereby not obtaining a good joint in any case.

Accordingly the bead apex applying method of this invention wherein a bead ring is supported by the inner peripheral surface thereof to be rotatable circumferentially in a predetermined position in a vertical or nearly vertical plane, applying to the surface of the bead ring the leading end portion of an apex fed from one end thereof pressing the leading end portion against the top portion of the outer peripheral surface of said bead ring to support said apex so that it lies substantially along a tangent to the periphery of said bead ring at the top thereof, rotating said bead ring circumferentially to progressively apply the apex following the leading end portion to said bead ring, stopping the rotation of the bead ring at a predetermined angular position during the applying step, clamping the rear portion of the apex at a forepart of a cutting position and cutting it to a predetermined length, resuming rotation of said bead ring, the rear portion of said apex having been clamped after cutting it to length is characterised by swinging the rear portion of the apex towards said bead ring downwardly along a circular arc and in synchronism, with rotation, abutting the rear end surface of said apex against the leading end surface thereof to form a joint.

The apex applying apparatus of this invention provides a structure such that a bead ring may be supported by a bead ring supporting mechanism (1) having a rotation driving unit to be rotatable circumferentially in a predetermined position in a vertical or nearly vertical plane, an apex is fed from one end thereof by an apex feeding mechanism and the leading end portion thereof is handed over to a pressing mechanism, said pressing mechanism pressing said apex against a top portion of the peripheral surface of said bead ring and said bead ring supporting mechanism rotating said bead ring to successively apply said apex to the said bead ring, said apex being cut to a predetermined length and the remainder being then completely applied, characterised in that the fore end portion of said apex feeding mechanism is arranged to move forwards and backwards between a retracted position apart from the vicinity of the top portion of said bead ring and an advancing position at which the leading end portion of said apex is handed over to said pressing mechanism, a chucking mechanism which can clamp the apex is provided to swing in a circular arc downwardly between a forepart of the leading end portion of said apex feeding mechanism which is in said retracted position and a joint position near the top of said bead ring to which the leading end portion of said apex moves, and an apex cutting position of a predetermined size apex cutting mechanism is disposed between the fore end portion of said apex feeding mechanism which is in said retracted position and said chucking mechanism which is in said forepart position of the fore end portion.

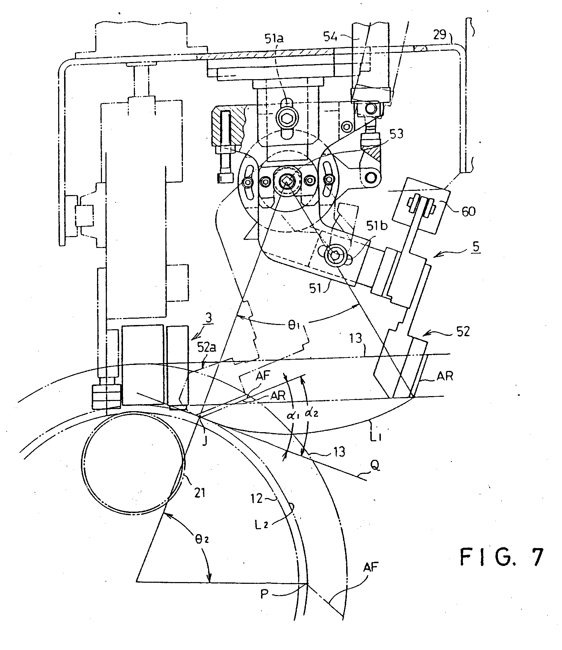

As a result of this invention, the apex is successively applied from its leading end portion to the bead ring, the cutting position of the rear end portion thereof is clamped in its forepart and cut to a predetermined length, and the rear end portion of the apex, which was clamped when it was cut to length, is swung (or moved) still held clamped, along a circular convex arc downwardly towards the bead ring. Therefore, referring to Figure 7 the joint position where the leading end surface AF and the rear end surface AR of the bead apex are butted against each other is denoted as J and shows a rotating axis 53 of the chucking mechanism, the joint position J and the centre of the bead ring are assumed to lie on a straight line, the leading end surface AF and the rear end surface AR completely and accurately butt against each other neither more nor less at the above-mentioned joint position. The movement distance L1 of the rear end surface AR, which corresponds to an angle of rotation θ₁ of the rear end surface AR is equal to the movement distance L2 of the leading end surface AF corresponding to an angle of rotation θ₂ of the leading end surface AF from the position P of the leading end surface at the apex cutting time to the above-mentioned joint position J. Also the angle α₁ between the tangent Q on the bead wire and the leading end surface AF is equal to an angle α₂ between the tangent Q of the bead wire and the rear end surface AR at the above-mentioned joint position J. It can be seen that if L1 is equal to L2 and α₁ is equal to α₂, the leading end surface AF and the rear end surface AR contact each other in their outer peripheral regions but have a gap in their inner peripheral regions, if θ₁ is greater than θ₂, and the leading end surface AF and the rear end surface AR contact each other in their inner peripheral regions and form a gap in their outer peripheral side if θ₁ is less than θ₂. Accordingly, this relation can be utilised to determine θ₁ and θ₂ in advance so that the leading and rear end surfaces completely butt against each other neither too much or too little, thereby forming a good open joint. If the rear end portion of the apex is swung (or moved) as described above as it is clamped, the apex is applied during the rotation of the bead ring and also its application advances with its revolution and, in the meantime, and the angle of the rear end surface varies and comes into conformity with the leading end surface.

According to this method, there may be a shrinkage in the outer peripheral side of the apex being applied to the bead ring since the leading end portion of the apex is not subjected to any special confinement after its leading end portion is pressed against the peripheral surface of the bead ring. However, since it is arranged to clamp the rear end portion of the apex by means of the chucking unit after cutting to length and cause the chucking unit to swing or move downwardly in a circular convex arc to apply the remainder of the apex to the peripheral surface of the bead ring and also join the leading and rear end surfaces. Thus it is possible to completely butt the leading and rear end surfaces of the apex neither more nor less by making the moving distance L1 of the rear end surface corresponding to the angle of rotation θ₁ equal to the moving distance L2 of the leading end surface corresponding to the angle of rotation θ₂ from the position of the leading end surface at the time of cutting the apex and the joint position of the leading and rear end surfaces, and the angle α₁ between the tangent Q of the bead wire and the leading end surface equal to the angle α₂ between the tangent Q of the bead wire and the rear end surface at the joint position and, therefore, there is neither an excess nor a lack of rubber and no deformation in the vicinity of the joint portion of the apex. Accordingly, the uniformity of the resultant tyre is improved to enhance the quality of the tyre.

According to this method, moreover, it is possible to apply a bead filler to the apex and wind up substantially at the same time with a slight delay from the application of apex to the bead ring.

By using this method of applying the bead filler and winding up at the same time as above, productivity is improved even more. It is also possible to use, in the apparatus for realising this method, a drum-shaped bead ring supporting mechanism in addition to the roller-type. However, the roller-type bead ring supporting mechanism is needed for providing a bead filler feeding mechanism in the case of executing filler application and winding-up at the same time.

The drawings show an embodiment of this invention in which:
Figure 1 is a partly enlarged front view showing a main portion viewed from an arrow direction B of Figure 2;
Figure 2 is a section right side view of a A-A section of Figure 1 viewed in the direction of the arrow;
Figure 3 is a front view showing a portion supported by a slanting frame 29;
Figure 4 is a partial right side view;
Figure 5 is a plan view of an apex feeding mechanism 2.
Figure 6 is a partial sectional right side view of a pressing mechanism 3;
Figure 7 is an enlarged front view showing the relationship between a chucking mechanism 5 and a bead ring 12;
Figure 8 shows the chucking mechanism 5 which in (a) is an enlarged right side view viewed from a direction normal to its plane of movement, (b) is a right side view of (a) and (c) is a section on the line C-C- of (b);
Figure 9(a) is a front view showing the structure of a bead filler feeding and guiding mechanism 7.
Figure 9(b) is a schematic view of a moving plate portion of a pressing and cutting portion 66 viewed from the side of a filler supporting surface;
Figure 10 is an enlarged partial sectional view of a bead filler winding up mechanism 8;
Figure 11 is a right side view of a press roll mechanism 9;
Figure 12 is a cross sectional plan view of the press roll mechanism 9;
Figures 13(a) and (b) are sectional views showing states where the apex and bead filler are applied to the bead ring;
Figure 14 shows a state of cutting the apex, wherein (a) is a plan view, (b) is a front view and (c) is a right side view; and
Figures 15(a) to 15(f) are schematic front views of various states to illustrate the operation of the apparatus of the embodiment.

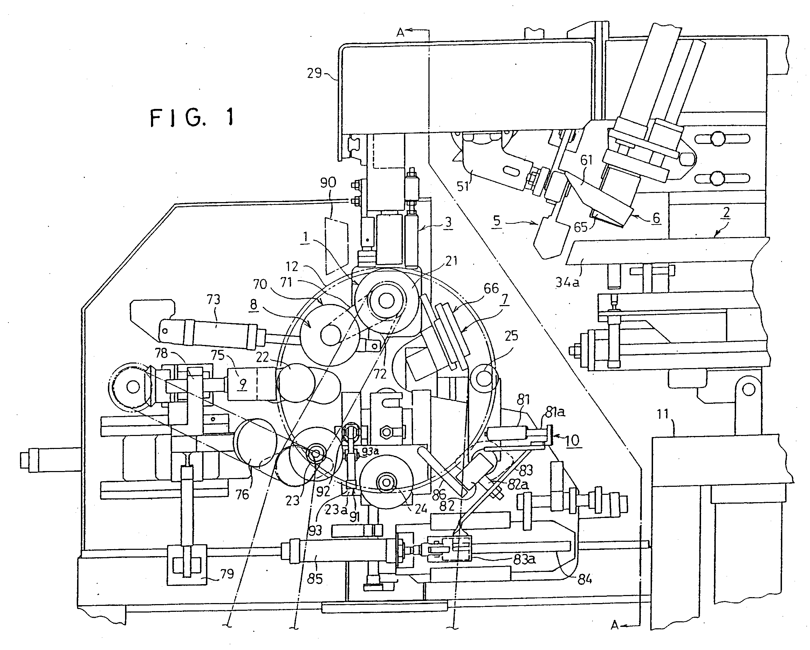

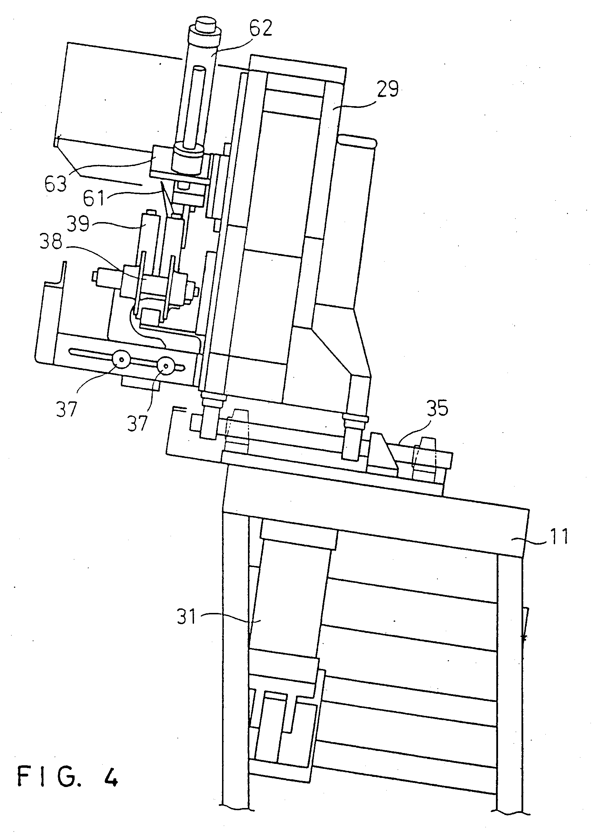

An embodiment of this invention will be described now with reference to Figures 1 to 15. The drawings show a bead ring supporting mechanism 1, and apex feeding mechanism 2, a pressing mechanism 3, an apex leading end portion detector (not shown), a chucking mechanism 5, an apex cutting mechanism 6, a bead filler feeding and guiding mechanism 7, a filler winding up mechanism 8, a press roll mechanism 9, and a guide roller mechanism 10.

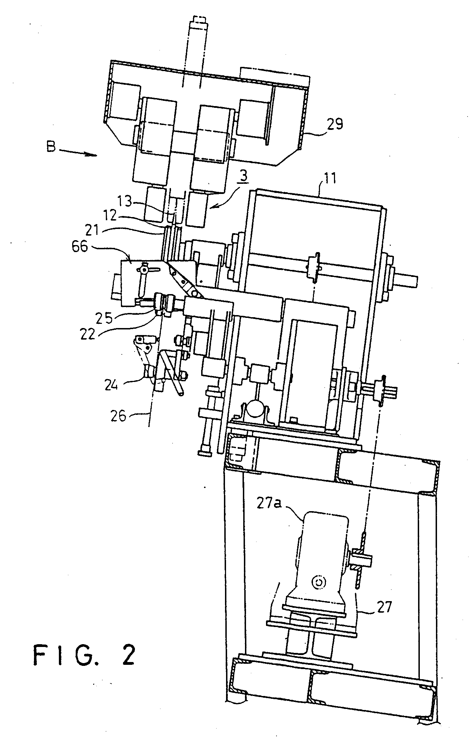

The bead ring supporting mechanism 1 comprises first, second, third, fourth and fifth support rollers 21,22,23,24 and 25 attached to a machine frame 11. As shown in Figures 1 and 2, each of the support rollers 21 to 25 are adapted to rotatably support a bead ring 12 in a plane 26 which is slightly slanting with respect to the vertical plane. The first support roller 21 is disposed in a predetermined upper position and the first and second support rollers 21 and 22 are adapted to be rotationally driven in a counter-clockwise direction in Figure 1 by a drive motor 27 through a reduction gear 27a, sprockets and chains. The first to fifth support rollers 21 to 25 each have a groove in their peripheries adapted to engage the inner peripheral surface of a bead ring 12. The fifth support roller 25 is rotatably pivoted and the second and fifth support rollers 22 and 25 have their support shafts supported on a swinging arm moved by a drive cylinder and thus are adapted to move to an acting position (i.e. the position of Figure 1) where they contact the inner peripheral surface of the bead ring 12 and to a retracted position displaced inwardly from the acting position. The third and fourth support rollers 23 and 24 have, respectively, a groove having one of its side walls formed greater in diameter and a shaft supported rotatably and the shafts are fixed to a moving plate 23a driven by a cylinder and are adapted to move to an acting position where they contact the inner peripheral surface of a bead ring and a retracted position displaced upwardly from the acting position. The acting positions of the second to fifth support rollers 22 to 25 are adapted to allow adjustment to respond to changes of the bead ring diameter by changing stops which set their movement by the cylinders.

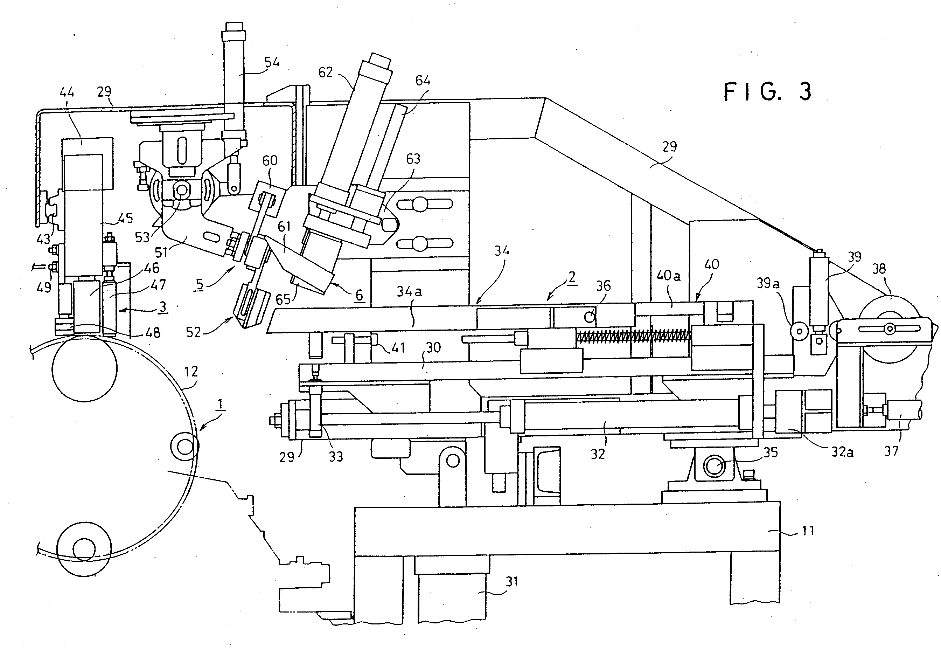

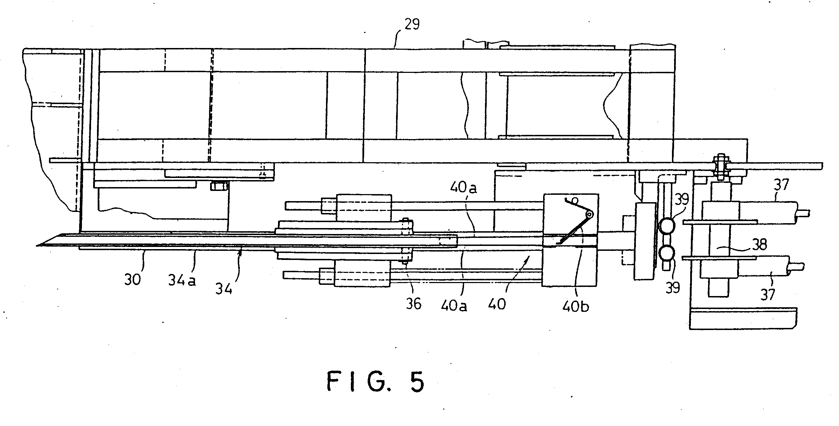

As shown in Figures 3 and 5, the apex feeding mechanism 2 comprises a guide rail 30, cylinders 31,32 and 33 and an apex guide 34 which are disposed on a slanting frame 29. The slanting frame 29 is supported on the machine frame 11 so as to be rotatable about an axle 35 and arranged to be moved up and down at the side of the bead ring supporting mechanism 1 by the cylinder 31. The guide rail 30 is fixed to the slanting frame 29 and extends in the left-to-right direction of Figure 3. The apex guide 34 is formed by a grooved member 34a for guiding an apex 13 in an upright state from the right to the left of the drawing and adapted to be driven forwards and backwards by air cylinders 32 and 32a along the guide rail 30. The cylinder 32 is separately provided to provide movement of a small distance (10 millimetres) in the same direction as the cylinder 32. The apex guide 34 can take a horizontal position where the bottom of its groove lies in a horizontal straight line which circumscribes the uppermost or top portion of the bead ring supported by the bead ring supporting mechanism 1, a position where its forepart is slightly raised about an axle 36 by the cylinder 33 separately disposed at the fore end portion of the guide rail 30 and the above-mentioned position where it is driven by the cylinders 32 and 32a and, also, it can take a vertically moved position where it is rotated by the above-mentioned cylinder 31 together with the slanting frame 29. Though not shown in the drawing, the apex fed in the groove of the apex guide 34 from the right side of Figure 3 is delivered from an apex delivering mechanism and is adapted to move upwards between a pair of guide rollers 37 from the underside thereof, to be put in an upright state where it is positioned with the tip of its triangular cross-section pointed upwards by a double flanged guide roller 38, to pass between a pair of guide rollers 39, a bottom face support roller 39a and a detent portion 40 to be in the groove of the member 34a. The detent portion 40 comprises a pair of leaf springs 40a arranged to guide the apex 13 therebetween and having their fore end portions in the advancing direction of the apex spaced narrower and their rear end portions fixed to a member which supports the member 34a and moves forwards and backwards. In the drawing, 40b denotes an apex detent urging spring. The apex 13 which comes out of the fore end of the apex guide 34 moves forward with the apex guide 34 and comes out from the apex delivering mechanism in such a fashion in that it is pulled out therefrom when the apex guide 34 moves forwards. Then, when the apex guide 34 moves backwards the apex is held at its fore end portion, which allow the guide 34 to move back without pulling back the apex 13. Figure 3 shows a stop 41 which sets the advance position or stroke of the apex guide 34 driven by the cylinder 32.

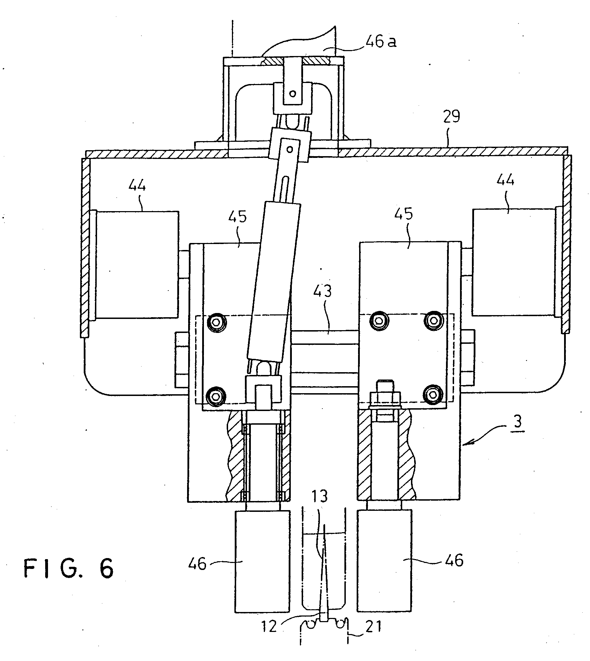

As shown in Figures 3 and 6, the pressing mechanism 3 is disposed at the fore end of the slanting frame 29 so as to be positioned above the bead ring supporting mechanism when the slanting frame 29 is in its horizontal lowered position and is provided with a pair of pressing roll support portions 45 which are movable to and from each other by a pair of air cylinders 44 along a guide rail 43 attached to the slanting frame 29. Both roll support portions 45 are provided respectively with centre rollers 46, inlet rollers 47 and outlet rollers 48 which are each in pairs at the sides. The centre rollers 47 project a little higher than the top portion of the bead ring 12 shown in Figure 3, and have an outer diameter uniform throughout the whole length and a length sufficiently greater than the height of the upright apex 13 and they are supported rotatably. The inlet rollers 47 are smaller in diameter than the centre rollers 46 and are both rotatably supported so that their height is adjustable in their axial direction. Each of the outlet rollers 48 includes three radial ball bearings supported on a shaft which is fixed to the roller support portion 45 by two bolts so that its angle can be adjusted about one of the bolts and, thus, it can be set in conformity with the inclination of the side face of the apex 13. The pressing mechanism 3 can be moved into a clamping position where the rollers are moved towards each other and a retracted position where they are mutually spaced apart by cylinders 44 and, further, into a lowered pressing action position and a raised position as shown by vertical movement of the slanting frame 29.

Though not shown in the drawings, an apex leading end detector of the photoelectric type is provided to enable detection of the leading end of the apex when it reaches a position corresponding to a predetermined angle of rotation, for example, about two thirds rotation, while the leading end of the apex 13 is applied to the periphery of the bead ring 12 and the succeeding apex is then applied by rotation of the bead ring 12. Its detection signal is used to control cutting of the apex 13 to a predetermined length during application and is also used to stop rotation of the bead ring 12 so that the length, from the leading end of the apex 13 to the cutting position of a cuter of the cutting mechanism 6, is equal to the peripheral length of the bead ring 12 plus the length of the overlap joint. In order to make the cut size correct, a pulse generator and a pulse counter to measure the angle of rotation of the bead ring 12 are provided to control and allow slowing down of the rotation of the bead ring after detection of the leading end and, at the same time, by counting pulses to stop it at a desired stop position after a predetermined number of pulses.

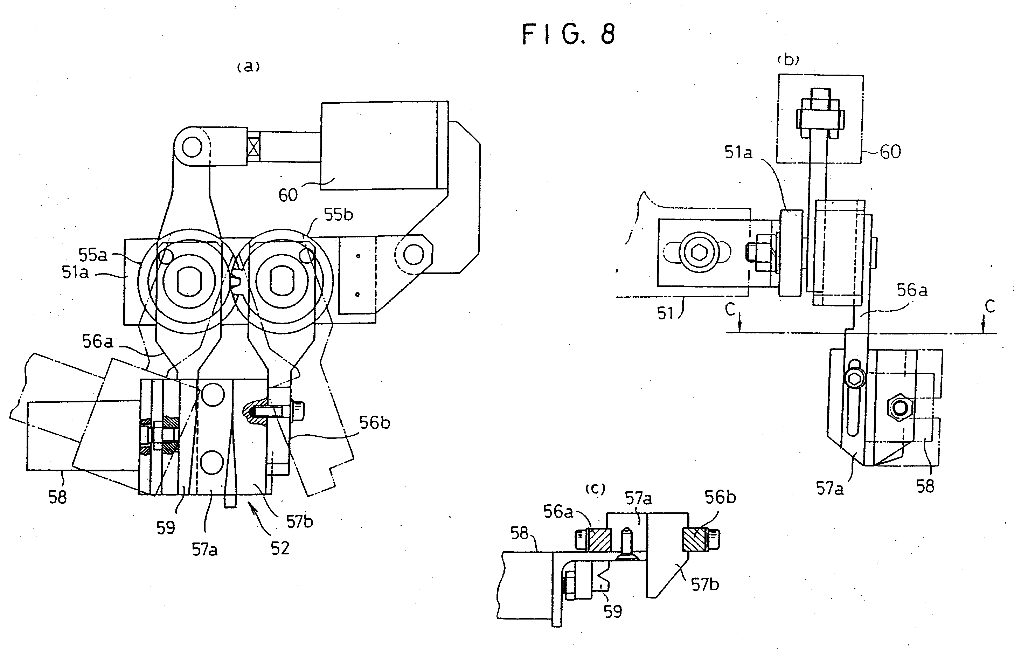

The chucking mechanism 5 is mounted on the slanting frame 29 so as to be positioned diagonally to the right of and above the bead ring supporting mechanism 1 as in Figures 1 and 3. It is composed of a swinging arm 51 pivoted on the slanting frame 29 and a chucking unit 52 mounted on the swing arm 51 as shown in Figures 7 and 8. The swinging arm 51 is rotatably supported at its base portion by an axle 53 and provided with a base height adjuster 51a. The swinging arm 51 extends a little downwardly from its base portion and then downwards to the right in Figure 7, has a length adjusting portion 51b midway thereof and supports the chucking unit 52 at the top. It is also adapted to rotate in a clockwise direction from the position shown by means of a cylinder 54. The chucking unit 52 comprises two mutually meshing similar gears 55a and 55b supported, rotatably at the top end of the swinging arm 51, actuating arms 56a and 56b extending from the respective gears, members 57a and 57b attached respectively to the top ends of the actuating arms 56 and 56b for contacting the side faces of the apex 13, another member 59 which is movable forwards and backwards by a cylinder 58 attached to the member 57a as facing part of the member 56b, and an actuating drive cylinder 60 disposed between an arm 56a attached to the gear 55a and the swinging arm 51. The chucking unit 52 is arranged in such a manner as to enable forwards and backwards movement of the apex guide 34 between the members 57a and 57b and the member 59 when they are mutually open (or apart) in the position of Figures 3 and 7. When the apex guide 34 moves backwards after the apex 13 is pulled out to the pressing mechanism 3, and apex 13 reaches between the fore end of the apex guide 34 which moves backwards and the rollers of the pressing mechanism, the apex 13 is clamped between the members 57a and 57b and the member 59 if they are closed by the cylinders 60 and 58. The chucking unit 52 is arranged so as to reach to a joint acting position 52, as shown in Figure 7, which is near the top portion of the bead ring 12 supported by the bead ring supporting mechanism 1 when it is revolved from its clamping position as shown, by the cylinder 54. After formation of the joint at this position, the cylinder 58 is actuated to press the joint portion against the member 57.

The apex cutting mechanism 6 is mounted on the slanting frame 29 so that, when the slanting frame 29 is in its lowered (horizontal) position, a cutter 61 effects a downward cutting action between the fore end of the apex guide 34 in its retracted position in the apex feed mechanism 2 and the chucking unit 52 in its clamping position. In the drawings, 62 denotes a cutter driving cylinder, 63 denotes a cylinder support member, 64 denotes a guide and 65 denotes a cutter mounting member. The mounting position and angle of the cylinder support member 63 with respect to the slanting frame 29 and the cutter mounting position of the cutter mounting member 65 are individually adjustable.

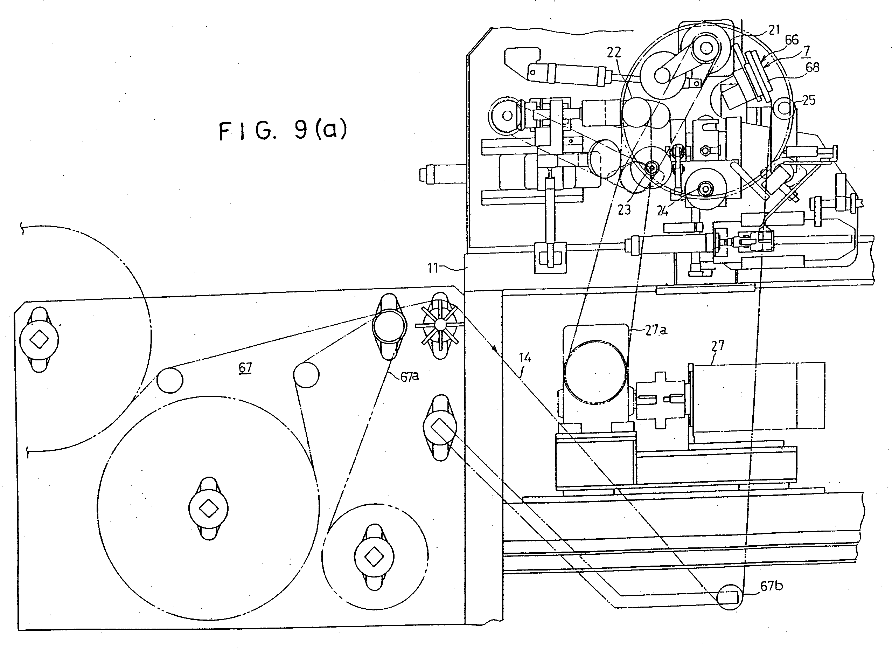

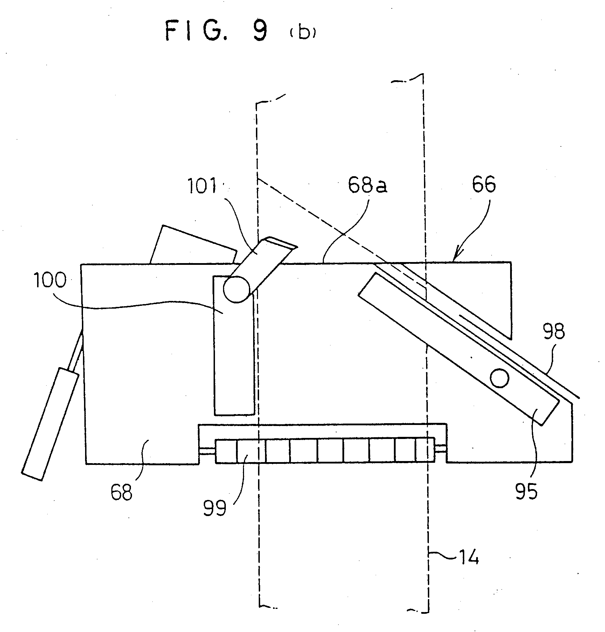

As shown in Figures 1 and 9(a), the filler feeding and guiding mechanism 7 comprises a pressing and cutting unit 66 disposed diagonally downwards to the right of the first support roller 21 and a filler feeding unit 67 for feeding a filler thereto.

As shown in Figure 9(b), the pressing and cutting unit 66 includes a movable plate 68 provided with a clamping plate 95, a filler guide 100, a cutter 98, an abacus roller 99 and a slide plate 101. The clamping plate 95 can be moved in a direction normal to the upper surface of the movable plate 68 by a cylinder to clamp and release the leading end portion of the filler to and from the movable plate 68 and the cutter 98 is adapted to move diagonally with respect to the upper edge 68a of the movable plate 68 in the vicinity of the upper edge. The movable plate 68 itself is adapted to be moved vertically by a cylinder between a lower retracted position as shown in Figure 9(a) and an upper pressing position in which its upper edge contacts a portion of the inner peripheral surface of the bead ring 12 which is close to the first support roller 21. The pressing and cutting unit 66 moves from the lower retracted position to the upper pressing position in a state wherein the bead filler 14 is clamped to the movable plate 68 by the clamping plate 95 so that the leading end of the filler 14 extends a little from the upper edge 68a of the movable plate 68, presses the leading end portion of the bead filler 14 to the inner peripheral portion of the bead ring 12 to join it thereto and, after joining, releases the clamping plate 95 to allow the filler 14 to be drawn out with rotation of the bead ring 12. Then, the movable plate 68 returns to its original lower retracted position. The bead filler 14, which is drawn out thereafter with rotation of the bead ring 12 and wound on to the bead ring 12 is cut to length by the cutter 98 while the rear end thereof if clamped by the clamping plate 95 and the movable plate 68 stands by in the lower retracted position clamping the leading end portion of the filler 14 which is newly formed by cutting. The filler feeding unit 67 which is provided for guiding and feeding the filler to the pressing and cutting unit 66 pays out the filler 14 while separately winding up a liner and guides it through a guide roll 67b to the pressing and cutting unit 66, as shown in Figure 9.

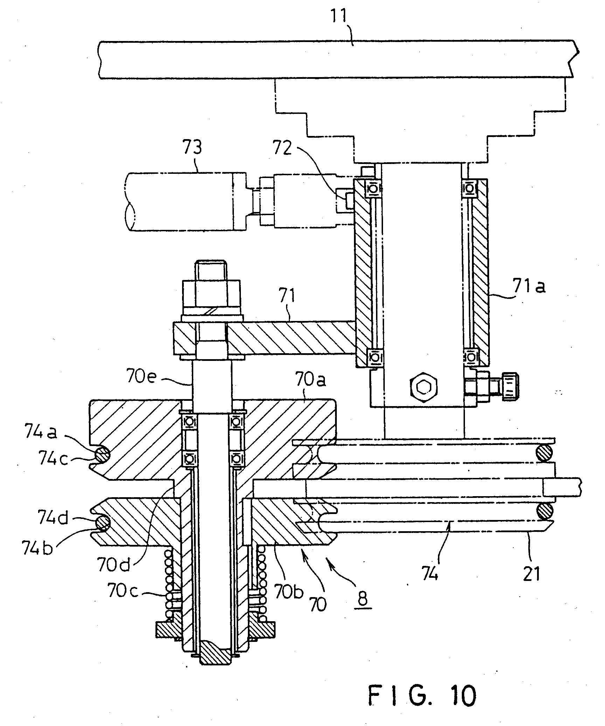

As shown in Figures 1 and 10, the filler winding mechanism 8 is disposed at a position between the first support roller 21 and the second support roller 22 and comprises a winding roller 70, a support arm 71, a driving arm 72, a driving cylinder 73 and a rotation transmitting unit 74. As shown in Figure 10, the winding roller 70 is composed of roller members 70a and 70b axially urged to form therebetween a groove 70d having a width corresponding to the width of the bead ring 12, and rotatably supported by an axle 70e which is fixed to the top of the support arm 71. The support arm 71 has a base end portion fixed to a tubular member 71a rotatably mounted on a part of an axle of the support roller 21. The base end of the driving arm 72 is fixed to the tubular member 71a and a driving cylinder 73 is disposed between the top of the driving arm 72 and the machine frame 11. With this arrangement, the winding roller 70 is moved from its retracted position as shown in Figure 1 to its winding operation position by contacting the length of the driving cylinder 73 to allow the bead ring 12 to pass within the groove 70d. The peripheral grooves 74a and 74b of the roller members 70a and 70b are provided to form a rotation transmitting unit 74 for transmitting rotation of the first support roller by hanging O-rings 74c and 74d between them and similar grooves are formed in the periphery of the first support roller 21.

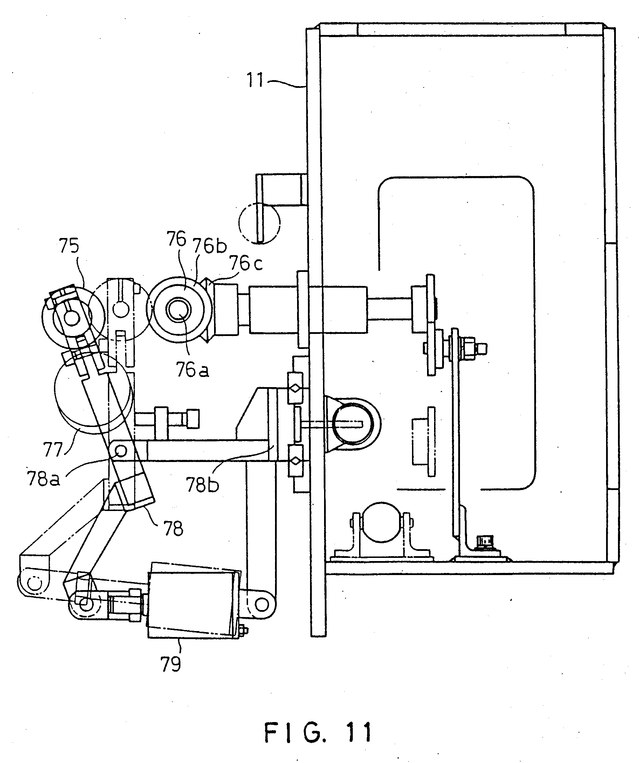

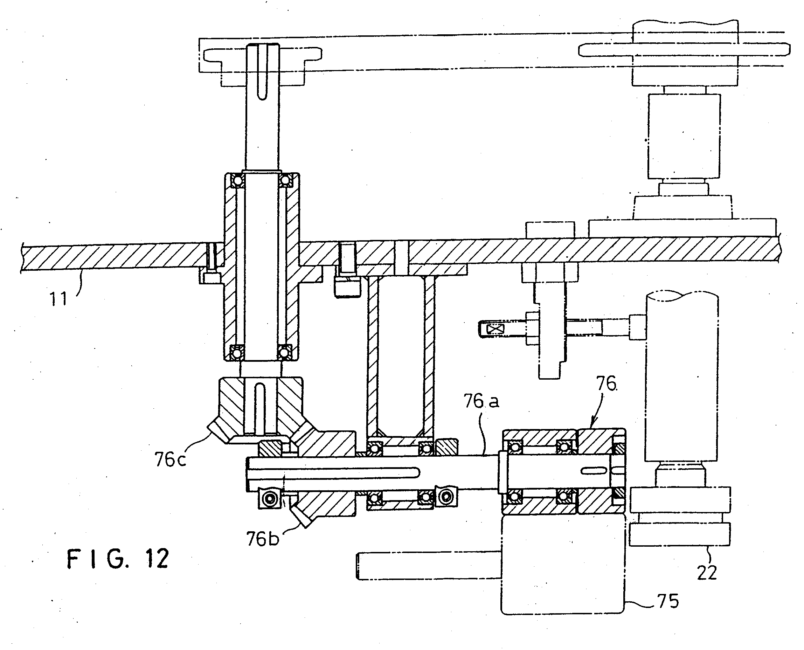

As shown in Figures 1 and 11, the press roll mechanism 9 is disposed to the left side of the second support roller 22 for pressing the wound filler 13 from both sides to sufficiently join it to the apex 12. The press roll mechanism 9 is composed of a pair of facing rollers 75 and 76, an independent roller 77, a roller support arm 78 and a driving cylinder 79. As shown in Figures 11 and 12, the rollers 75 and 77 are supported by a roller support arm 78 and are individually rotatable. The roller support arm 78 can swing about an axle 78a in the side of the machine frame 11 and the cylinder 79 is disposed between its lower end and the machine frame 11. As shown in Figure 11, the rollers 75 and 77 are moved by the action of the cylinder 79 between its retracted position as shown by a solid line and an extended or a press action position as shown in phantom lines. The roller 76 is disposed parallel to the roller 75 in a position when it pinches the wound filler and is adapted to be rotationally driven. In the drawing, 76a denotes a roller supporting shaft and 76b and 76c denote bevel drive gears. A support member 78b for the rollers 75 and 77 and the shaft 76a of the roller 76 of this press roll mechanism 9 can be moved for adjustment in the horizontal direction in the left-to-right direction in Figure 1.

The guide roller mechanism 10 provides a guide action for the apex 13 or the apex 13 with a filler 14 applied successively to the bead ring 12 supported by the bead ring supporting mechanism 1 and comprises guide rollers 81 and 82 disposed substantially between the fourth support roller 24 and the fifth support roller 25, a support arm 83 for supporting these rollers, a guide rail 84 and a cylinder 85. The guide rollers 81 and 82 are positioned so as to contact the apex 13, or the apex 13 with filler 12, respectively from the front side and the opposing rear side of Figure 1. Their support arms 81a and 82a are supported by the support arm 83. The support arm 83 is provided with a slide member 83a at its lower base portion which is movable along the guide rail 84 in the left-to-right direction in Figure 1. The guide rail 84 is fixed to the machine frame 11. The cylinder 85 is disposed under the guide roller 24 and adapted to move the guide rollers 81 and 82 between a guide action position as shown and a rightward retracted position. In the drawing, 86 denotes a guide rod disposed to the same side as the guide roller 82 and fixed to the movable plate 23a which supports the above-mentioned third and fourth support rollers 23 and 23 and moves with the third and fourth support rollers 23 and 24 to its acting position and retracted position.

In addition, a pushing mechanism 90 and a holding mechanism 91 are provided for taking out the bead assembly from the applying device after applying the apex 13 only or the apex 13 with filler 14 to the bead ring 12. The pushing mechanism 90 is composed of a pusher plate and a cylinder for pushing the upper portion of the completed bead assembly to the front as shown in Figure 1. The holding mechanism 91 comprises a cylinder 92 and a lever like holding member 93 attached to the above-mentioned movable plate 23a. The holding member 93 is pivoted on an axle 93a and acts to push in the lower portion of the bead assembly from the front to the back in Figure 1 to hold the bead assembly at a point in its lower position. When the pushing mechanism 90 and the holding mechanism 91 are actuated concurrently after the second and fifth support rollers 22 and 25 retract, the bead assembly rotates about its lower portion into a slanting state so that the upper portion of the bead assembly butts against a stop bar extending from the bead feeding device not shown. At the same time, the holding member 93 is actuated by the cylinder 92 to release holding of the bead assembly to allow the assembly to fall under its own weight in the slanting state to be received by a lower stock are for storage.

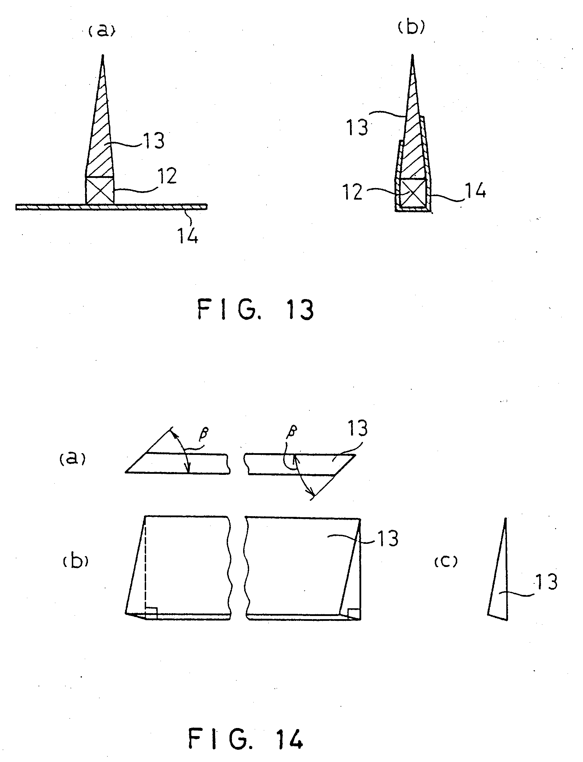

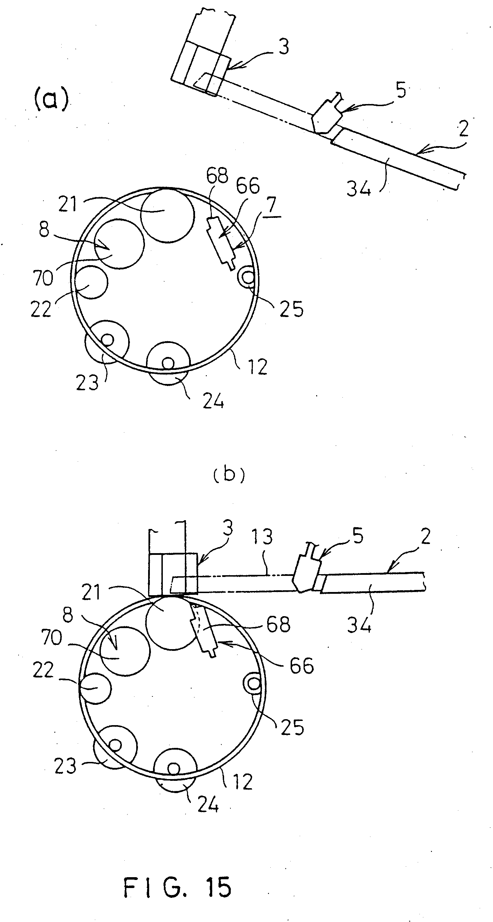

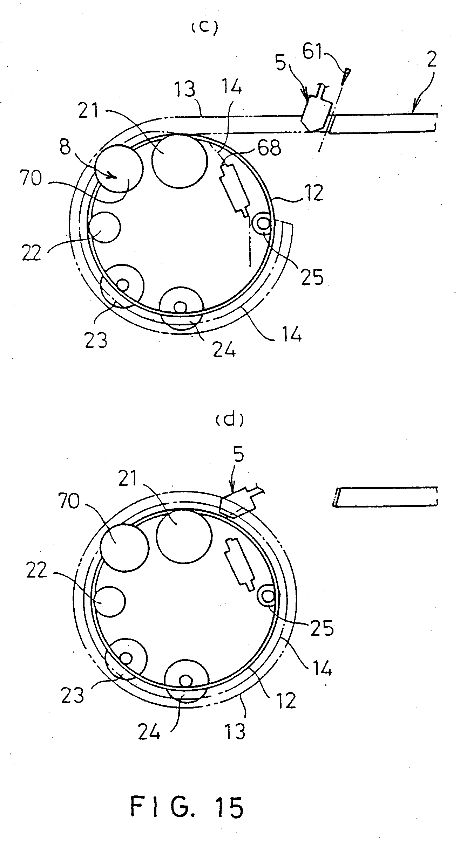

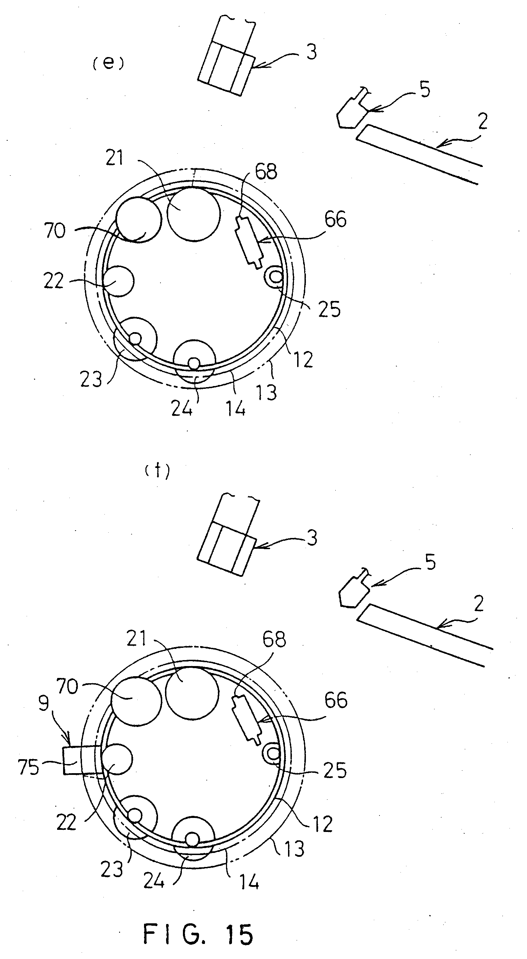

The apex applying device constructed as above operates as follows controlled by a sequence control.
(1) The apex feeding mechanism 2, pressing mechanism 3, chucking mechanism 5 and apex cutting mechanism 6 are initially in their stand-by positions in which the slanting frame 29 is raised at its left side by the cylinder 31 swaying about the axle 35.
(2) At this time, the pre-shaped apex 13 is taken out from the apex feeding mechanism and its leading end portion is drawn out in a vertically standing state to the fore end of the apex guide 34 of the apex feeding mechanism 2. The second to fifth support rollers 22 to 25 of the bead ring supporting mechanism 1 for supporting the bead ring 12 are moved to their retracted positions which are inside their acting positions for supporting the bead ring 12 by operation of the respective cylinders. The leading end of the strip or belt-shaped filler 14 is drawn out to the upper edge 68a of the movable plate 68 of the pressing and cutting unit 66 of the filler feeding and guiding mechanism 7 and the movable plate 68 retains or holds the leading end portion of the filler by the clamping plate 95 and is in its retracted position. Moreover, the pushing mechanism 90 and the holding mechanism 91 are also in their retracted positions.
(3) From such a stand-by state, the bead ring 12 is fed to the bead ring supporting mechanism 1 and located in the groove of the first support roller 21 thereof. This is effected by an automatic mounting device for the bead ring supporting mechanism 1 or by manual operation. The bead ring 12 is put on and contacts the first support roller 21, the lower guide rod 86 and the inner side surfaces of the large diameter portions of the third and fourth support rollers 23 and 24 and is thus supported in a stable and slightly slanting position with respect to the vertical plane.
(4) In this supported state, the second and fifth support rollers 22 to 25 move from their retracted positions to the acting positions to support the bead ring 12 in a state in the bottoms of the grooves in the rollers 22 and 25.
(5) In substantial synchronism with step (4), the apex guide 34 is moved forwards by contracting the cylinder 32 and the leading end portion of the apex 13 in its standing state is drawn out between the pair of central rollers 46 of the pressing mechanism 3. Then the rollers 46, 47 and 48 are moved to the mutually closed clamping position by operation of the cylinder 44 to clamp the leading end portion of the apex 13. Thereafter, the apex guide 34 moves backwards (c.f., Fig. 15(a)).
(6) After step (4), the moving plate 68 of the filler feeding and guiding mechanism 7 rises to its pressing position (c.f., Fig. 15b)) to press and join the leading end portion of the filler 14 to a part of the inner peripheral surface of the bead ring 12 at a position a small distance from the centre of the filler as shown in Figure 13(a). Upon completion of this jointing operation, the pressing plate 95 rises and the moving plate 68 lowers.
(7) Then, the slanting frame 29 which has been in its raised slanting position is swung down by operation of the cylinder 31 and, accordingly, the pressing mechanism 3 lowers clamping the leading end portion of the apex 13, thereby pressing the bead ring jointing surface of the leading end portion of the apex 13 against the top portion of the outer periphery of the bead ring 12 supported by the bead ring supporting mechanism 1 (c.f., Fig. 15(b)).
(8) Next, the first support roller 21, the winding roller 70, and the roller 76 of the press roll mechanism 9 commence rotation, being rotated by the motor 27, and the bead ring 12 rotates at a high speed, so that the apex 13 is successively applied to the outer peripheral surface and, at the same time, the filler 14 is progressively applied to its inner peripheral surface.
(9) As soon as the motor 27 commences rotation, the winding roller 70 swings to its winding action position about the axle of the first support roller 21 under the effect of the driving cylinder 73 to wind up and apply the filler 14 successively from its leading end portion around the bead apex. As shown in Figures 13(a) and (b), this winding operation changes the shape of the filler from (a) where the filler 14 is applied only to the lower surface of the assembly of the bead ring 12 and the apex 13 is jointed to its outer peripheral surface 12a into the state of (b) where it is also fitted to both side faces of the apex 13.
(10) When the leading end portion of the apex 13 applied to the rotating bead ring 12 has been rotated by a predetermined angle (the angle of rotation at which the length of the apex from its leading end portion to the position to be cut by the cutter 61 is equal to the outer peripheral length of the bead ring plus the length of the overlap joint), the apex leading end detector senses this and decelerates the rotation of the bead ring 12 to effect a stop of the rotation after a fixed number of pulses. This stop position is the above-mentioned position for the predetermined angle (c.f.,Fig. 15(c)).
(11) The member 34a of the apex guide 34 is rotated about the axle 36 by operation of the cylinder 33 to raise its head end by a small distance (e.g., 5 millimetres), thereby raising the clamped position of the apex 13. Its purpose is to avoid mutual widthwise displacement between the cut leading and rear end portions of the apex when both end portions are joined together.
(12) The chucking unit 52 of the chucking mechanism 6 is closed by operation of the cylinder 60 from its open state to clamp the apex 13 in the vicinity of the fore end portion of the apex guide 34, the member 59 being then in its retracted position (c.f., Fig. 15(c)).
(13) The cutter 61 of the apex cutting mechanism 6 moves forward by the operation of the cylinder 62 and cuts the apex 13. It is cut, as shown in Figures 14(a), (b) and (c), obliquely with respect to its longitudinal direction in the plan view (a) of the apex 13 so that its back surface is normal to the longitudinal direction in the front view (b) (c.f.,Fig. 15(c)).
(14) After forward movement of the cutter 61, the apex guide 34 is drawn back a little by operation of the cylinder 32a. The purpose of this is to avoid the cutter 61 from being caught by the next leading end portion formed by cutting the apex 13 at the time of its backward movement. Succeedingly, the cutter 61 moves backwards with the operation of the cylinder 62.
(15) The rotation of the bead ring 12 is then resumed. At the same time, the chucking unit 52 of the chucking mechanism 5 swings to the bead ring side about the axle 53 as clamping the rear end of the apex 13 and the bead ring 12 is decelerated after a lapse of preset pulses to stop rotation at a predetermined angular position. At this time, the rear end portion of the apex 13 cut to length is applied to the bead ring 12 and, at the same time, the rear end face and the end face of its leading end portion which has already been applied to the bead ring 12 butt against each other to form a joint.
(16) Then, the member 59 of the chucking unit 52 moves forwards towards the member 57b by the operation of the cylinder 58 and this presses the joint against the member 57n.
(17) In the meantime, the member 59 moves backwards by operation of the cylinder 58 and the chucking unit 52 subsequently opens by operation of the cylinder 60. It then swings by operation of the cylinder 54 back to its original retracted position.
(18) The bead ring 12 then rotates and stops after a predetermined number of pulses and the pressing plate 95 of the pressing and cutting unit 66 of the filler feeding and guiding mechanism 7 presses the filler 14. The cutter 98 effects a cutting action to cut the rear portion of the filler 14 at a fixed length (the inner peripheral length of the bead ring 12 plus the overlap joint length) position.
(19) After the filler cutting operation, the bead ring 12 resumes rotation and rotates measured by a predetermined number of pulses to completely wind up the filler 14 around the bead ring and the apex and then stops after passing the press roll mechanism 9 (Fig. 15(f)).
(20) A predetermined time after the filler 14 is cut, the slanting frame 29 swings upwards about the axle 35 by operation of the cylinder 31 to return to its original slanting retracted position (Fig. 15(e)).
(21) The second to fifth rollers 22 to 25 and the winding roller 70 then return to their original retracted positions.
(22) At the same time, the holding member 93 of the holding mechanism 91 holds the lower portion of the bead ring structure including the fitted apex 13 and filler 14 and, then, the pushing mechanism 90 pushes against the upper portion of the bead ring structure. The bead ring structure thus falls against the stop bar of the bead feeding device, the holding member 93 releases the lower portion of the bead ring structure to allow it to fall under its own weight as it slants, and to be received by the lower stock arm for storage.

While the above embodiment is described with both an apex 13 and a filler 14 being applied to the bead ring 12, only an apex 13 may be applied to the bead ring 12 if desired. In such a case the apparatus may be more simple constructed without the parts relating to the filler 14 or the apparatus of the embodiment may be used with the parts relating to assembly of the filler 14 held in their retracted positions to inhibit their operation.

The bead apex applying method and device of this invention may be utilised in the process of applying an apex to the outer peripheral surface of the bead ring prior to assembling the bead portion or the process of applying an apex and also a strip or belt-shaped filler to the outer peripheral surface of a bead ring for the manufacture of a pneumatic tyre for an automobile.

## Claims

1. A method of applying a bead apex to a bead ring wherein a bead ring (12) is supported by the inner peripheral surface thereof to be rotatable circumferentially in a predetermined position in a vertical or nearly vertical plane, applying to the surface of the bead ring (12) the leading end portion of an apex (13) fed from one end thereof pressing the leading end portion against the top portion of the outer peripheral surface of said bead ring (12) to support said apex (13) so that it lies substantially along a tangent to the periphery of said bead ring (12) at the top thereof, rotating said bead ring circumferentially to progressively apply the apex (13) following the leading end portion to said bead ring (12), stopping the rotation of the bead ring (12) at a predetermined angular position during the applying step, clamping the rear portion of the apex (13) at a forepart of a cutting position and cutting it to a predetermined length, resuming rotation of said bead ring (12), the rear portion of said apex having been clamped after cutting it to length, characterised by swinging the rear portion of the apex (13) towards said bead ring (12) downwardly along a circular arc and in synchronism with rotation, abutting the rear end surface of said apex (13) against the leading end surface thereof to form a joint.

2. A method of applying a bead apex to a bead ring according to claim 1 characterised by feeding a surface of the leading end portion of a belt shaped bead filler (14) from one end thereof and applying it to the inner peripheral surface of said bead ring (12) pressing it against an inner peripheral surface portion near the top portion of said bead ring (12), rotating the bead ring (12) circumferentially to successively apply said apex (13) and said filler (14) to said bead ring (12) and to wind or wrap the filler (14) around said bead ring (12) and said apex (13) during rotation, and, after forming the joint, again stopping the rotation of said bead ring (12), cutting said filler (14) to length during the stoppage and rotating the bead ring (12) to complete the filler applying and winding step.

3. An apex applying apparatus comprising a structure such that a bead ring (12) may be supported by a bead ring supporting mechanism (1) having a rotation driving unit to be rotatable circumferentially in a predetermined position in a vertical or nearly vertical plane, an apex (13) is fed from one end thereof by an apex feeding mechanism (2) and the leading end portion thereof is handed over to a pressing mechanism (3), said pressing mechanism (3) pressing said apex (13) against a top portion of the peripheral surface of said bead ring (12) and said bead ring supporting mechanism (1) rotating said bead ring (12) to successively apply said apex (13) to the said bead ring (12), said apex (13) being cut to a predetermined length and the remainder being then completely applied, characterised in that the fore end portion of said apex feeding mechanism (2) is arranged to move forwards and backwards between a retracted position apart from the vicinity of the top portion of said bead ring (12) and an advancing position at which the leading end portion of said apex (13) is handed over to said pressing mechanism (3), a chucking mechanism (5) which can clamp the apex (13) is provided to swing in a circular arc downwardly between a forepart of the leading end portion of said apex feeding mechanism (2) which is in said retracted position and a joint position near the top of said bead ring (12) to which the leading end portion of said apex (13) moves, and an apex cutting position of a predetermined size apex cutting mechanism (6) is disposed between the fore end portion of said apex feeding mechanism (2) which is in said retracted position and said chucking mechanism (5) which is in said forepart position of the fore end portion.

4. An apex applying apparatus as set forth in claim 3, characterised in that said bead ring supporting mechanism (1) is composed of a driving roller and a tension roller which may be put in contact with the inner peripheral surface of the bead ring (12), a filler feeding mechanism (7) is provided fro feeding a belt-shaped filler (14) from one end thereof to an inner peripheral surface portion near the top portion of said bead ring (12), a filler winding mechanism (8) is disposed in a position apart from said filler feeding mechanism (7) in the direction of rotation of said bead ring (12), said filler feeding mechanism (7) including a predetermined size filler cutting unit (66), so that said apex (13) may be applied to the outer peripheral surface of the bead ring (120 and, at the same time, the filler (14) may be applied to the inner peripheral surface of said bead ring (12) and also wound up around the bead ring (12) and the apex (13).

## Patentansprüche

1. Ein Verfahren zum Anbringen eines Wulst-Kernreiters an einen Wulstring, worin ein Wulstring (12) durch die innere Umfangsoberfläche davon getragen wird, um umfangsmäßig in einer vorbestimmten Position in einer vertikalen oder beinahe vertikalen Ebene drehbar zu sein, wobei an die Oberfläche des Wulstringes (12) das vordere Endteilstück eines Kernreiters (13) angebracht wird, der von einem Ende davon zugeführt wird, wobei das vordere Endteilstück gegen das obere Teilstück der äußeren Umfangsoberfläche des Wulstringes (12) gepreßt wird, um den Kernreiter (13) zu tragen, so daß er im wesentlichen entlang einer Tangente zu dem Umfang des Wulstringes (12) bei dem oberen Ende davon liegt, der Wulstring umfangsmäßig gedreht wird, um den Kernreiter (13) dem vorderen Endteilstück folgend an den Wulstring (12) fortschreitend anzubringen, die Drehung des Wulstringes (12) bei einer vorbestimmten Winkelposition während des Anbringungsschrittes gestoppt wird, das hintere Teilstück des Kernreiters (13) bei einem Vorderteil einer Schnittposition festgeklemmt wird und er auf eine vorbestimmte Länge geschnitten wird, eine Drehung des Wulstringes (12) wieder aufgenommen wird, wobei das hintere Teilstück des Kernreiters festgeklemmt worden ist, nachdem er auf eine Länge geschnitten wurde, gekennzeichnet durch Bewegen bzw. Schwenken des hinteren Teilstücks des Kernreiters (13) auf den Wulstring (12) zu abwärts entlang eines kreisförmigen Bogens und, synchron mit einer Drehung, Anstoßen der hinteren Endoberfläche des Kernreiters (13) an dessen vordere Endoberfläche, um eine Verbindung zu bilden.

2. Ein Verfahren zum Anbringen eines Wulst-Kernreiters an einen Wulstring nach Anspruch 1, gekennzeichnet durch Zuführen einer Oberfläche des vorderen Endteilstücks eines gürtelförmigen Wulstfüllers (14) von einem Ende davon und Anbringen von ihr an der inneren Umfangsoberfläche des Wulstringes (12), wobei sie gegen ein inneres Umfangsoberflächenteilstück nahe dem oberen Teilstück des Wulstringes (12) gepreßt wird, umfangsmäßiges Drehen des Wulstringes (12), um den Kernreiter (13) und den Füller (14) sukzessiv an den Wulstring (12) anzubringen und um den Füller (14) um den Wulstring (12) und den Kernreiter (13) herum während einer Drehung zu wickeln oder zu hüllen, und, nach Bilden der Verbindung, erneutes Stoppen der Drehung des Wulstringes (12), Schneiden des Füllers (14) auf eine Länge während des Stillstands und Drehen des Wulstringes (12), um den Anbringungs- und Wickelschritt für den Füller zu beenden.

3. Ein Gerät zum Anbringen eines Kernreiters mit einem Aufbau, so daß ein Wulstring (12) durch einen Wulstring-Tragmechanismus (1) getragen werden kann, der eine Drehantriebseinheit aufweist, um umfangsmäßig in einer vorbestimmten Position in einer vertikalen und beinahe vertikalen Ebene drehbar zu sein, ein Kernreiter (13) von einem Ende davon durch einen Kernreiter-Zufuhrmechanismus (2) zugeführt wird und das vordere Endteilstück davon an einen Druck- bzw. Preßmechanismus (3) übergeben wird, wobei der Preßmechanimus (3) den Kernreiter (13) gegen ein oberes Teilstück der Umfangsoberfläche des Wulstringes (12) preßt und der Wulstring-Tragmechanismus (1) den Wulstring (12) dreht, um den Kernreiter (13) an den Wulstring (12) sukzessiv anzubringen, wobei der Kernreiter (13) auf eine vorbestimmte Länge geschnitten wird und der Rest dann vollständig angebracht wird, dadurch gekennzeichnet, daß das vordere Endteilstück des Kernreiter-Zufuhrmechanismus (2) angeordnet ist, um sich zwischen einer zurückgezogenen Position, die von der Umgebung des oberen Teilstücks des Wulstringes (12) getrennt ist, und einer Vorschubposition vorwärts und rückwärts zu bewegen, bei der das vordere Endteilstück des Kernreiters (13) an den Preßmechanismus (3) übergeben wird, ein Einspannmechanismus (5), der den Kernreiter (13) festklemmen kann, vorgesehen ist, um in einem kreisförmigen Bogen abwärts zwischen einem Vorderteil des vorderen Endteilstücks des Kernreiter-Zufuhrmechanismus (2), der sich in der zurückgezogenen Position befindet, und einer Verbindungsposition nahe der Oberseite des Wulstringes (12) sich zu bewegen bzw. zu schwenken, zu der sich das vordere Endteilstück des Kernreiters (13) bewegt, und eine Kernreiter-Schneideposition eines Schneidemechanismus (6) für einen Kernreiter einer vorbestimmten Größe zwischen dem vorderen Endteilstück des Kernreiter-Zufuhrmechanismus (2), der sich in der zurückgezogenen Position befindet, und dem Einspannmechanismus (5) angeordnet ist, der sich in der Vorderteilposition des vorderen Endteilstücks befindet.

4. Ein Gerät zum Anbringen eines Kernreiters wie in Anspruch 3 dargelegt, dadurch gekennzeichnet, daß der Wulstring-Tragmechanismus (1) aus einer Antriebsrolle und einer Spannungsrolle besteht, die in Kontakt mit der inneren Umfangsoberfläche des Wulstringes (12) gebracht werden können, ein Füller-Zufuhrmechanismus (7) vorgesehen ist, um einen gürtelförmigen Füller (14) von einem Ende davon zu einem inneren Umfangsoberflächenteilstück nahe dem oberen Teilstück des Wulstringes (12) zuzuführen, ein Füller-Wickeimechanismus (8) in einer Position von dem Füller-Zufuhrmechanismus (7) in der Drehrichtung des Wulstringes (12) getrennt angeordnet ist, wobei der Füller-Zufuhrmechanismus (7) eine Schneideeinheit (66) für einen Füller einer vorbestimmten Größe einschließt, so daß der Kernreiter (13) an die äußere Umfangsoberfläche des Wulstringes (12) angebracht werden kann und zu der gleichen Zeit der Füller (14) an die innere Umfangsoberfläche des Wulstringes (12) angebracht und auch um den Wulstring (12) und den Kernreiter (13) herum gewickelt werden kann.

## Revendications

1. Procédé d'application d'une pointe de bourrage de talon sur un anneau de talon, dans lequel un anneau de talon (12) est supporté par sa surface périphérique interne afin qu'il puisse tourner circonférentiellement en position prédéterminée dans un plan vertical ou presque vertical, l'application à la surface de l'anneau de talon (12) de la partie d'extrémité avant d'une pointe de bourrage (13) avançant depuis une extrémité, avec application d'une pression à la partie d'extrémité avant contre la partie supérieure de la surface périphérique externe de l'anneau de talon (12) afin que la pointe de bourrage (13) soit supportée et se trouve pratiquement suivant une tangente à la périphérie de l'anneau de talon (12) à sa partie supérieure, l'entraînement en rotation de l'anneau de talon circonférentiellement afin que la pointe de bourrage (13) soit appliquée progressivement après la partie d'extrémité avant sur l'anneau de talon (12), l'arrêt de la rotation de l'anneau de talon (12) à une position angulaire prédéterminée pendant l'étape d'application, le serrage de la partie arrière de la pointe de bourrage (13) à une partie avant d'une position de coupe et la coupe de la pointe à une longueur prédéterminée, la reprise de la rotation de l'anneau de talon (12), la partie arrière de la pointe de bourrage ayant été serrée après sa coupe à la longueur, caractérisé par le basculement de la partie arrière de la pointe de bourrage (13) vers l'anneau de talon (12) vers le bas en arc de cercle et en synchronisme avec la rotation, avec mise en butée de la surface d'extrémité arrière de la pointe de bourrage (13) contre la surface d'extrémité avant pour la formation d'un raccord.

2. Procédé d'application d'une pointe de bourrage de talon sur un anneau de talon selon la revendication 1, caractérisé par l'avance d'une surface de la partie d'extrémité avant d'un organe (14) de remplissage de talon en forme de ceinture par une extrémité et son application à la surface périphérique interne de l'anneau de talon (12) avec application d'une pression contre la partie de surface périphérique interne près de la partie supérieure de l'anneau de talon (12), la rotation de l'anneau de talon (12) circonférentiellement afin que la pointe de bourrage (13) et l'organe de remplissage (14) soient appliqués successivement à l'anneau de talon (12) et que l'organe de remplissage (14) soit enroulé ou enveloppé autour de l'anneau de talon (12) et de la pointe de bourrage (13) pendant la rotation, et, après la formation du raccord, l'arrêt à nouveau de la rotation de l'anneau de talon (12), la coupe de l'organe de remplissage (14) à la longueur pendant l'arrêt, et l'entraînement en rotation de l'anneau de talon (12) afin que l'étape d'application d'organe de remplissage et d'enroulement soit terminée.

3. Appareil d'application d'une pointe de bourrage, ayant une structure telle qu'une pointe de bourrage de talon (12) peut être supportée par un mécanisme (1) de support d'anneau de talon ayant une unité d'entraînement en rotation de manière qu'il puisse tourner circonférentiellement en position prédéterminée dans un plan vertical ou presque vertical, une pointe de bourrage (13) avançant à partir d'une extrémité sous l'action d'un mécanisme (2) d'avance de pointe de bourrage, sa partie d'extrémité avant étant transmise à un mécanisme de pression (3), le mécanisme de pression (3) exerçant une pression sur la pointe de bourrage (13) vers une partie supérieure de la surface périphérique de l'anneau de talon (12), et le mécanisme (1) de support d'anneau de talon entraînant en rotation l'anneau de talon (12) afin qu'il applique successivement la pointe de bourrage (13) à l'anneau de talon (12), la pointe de bourrage (13) étant coupée à une longueur prédéterminée et le reste étant alors appliqué totalement, caractérisé en ce que la partie d'extrémité avant du mécanisme (2) d'avance de la pointe de bourrage est destinée à se déplacer vers l'avant et vers l'arrière entre une position reculée à distance du voisinage de la partie supérieure de l'anneau de talon (12) et une position avancée dans laquelle la partie d'extrémité avant de la pointe de bourrage (13) est transmise au mécanisme de pression (3), un mécanisme de serrage (5) qui peut serrer la pointe de bourrage (13) est destiné à basculer en arc de cercle vers le bas entre une partie avant de la partie d'extrémité avant du mécanisme (2) d'avance de pointe de bourrage qui est en position reculée et une position de raccordement proche de la partie supérieure de l'anneau de talon (12) vers laquelle se déplace la partie d'extrémité avant de la pointe de bourrage (13), et une position de coupe de pointe de bourrage de dimensions prédéterminées, et un mécanisme (6) de coupe de pointe de bourrage est placé entre la partie d'extrémité avant du mécanisme (2) d'avance de pointe de bourrage qui est en position reculée et le mécanisme de serrage (5) qui est à la position la plus en avant de la partie d'extrémité avant.

4. Appareil d'application de pointe de bourrage selon la revendication 3, caractérisé en ce que le mécanisme (1) de support d'anneau de talon est composé d'un rouleau menant et d'un rouleau de tension qui peuvent être mis au contact de la surface périphérique interne de l'anneau de talon (12), un mécanisme (7) d'avance d'organe de remplissage est destiné à faire avancer un organe de remplissage (14) en forme de ceinture par une extrémité à une partie de surface périphérique interne proche de la partie supérieure de l'anneau de talon (12), un mécanisme (8) d'enroulement d'organe de remplissage est placé à distance du mécanisme (7) d'avance d'organe de remplissage dans le sens de rotation de l'anneau de talon (12), le mécanisme (7) d'avance d'organe de remplissage comprenant une unité (66) de coupe d'organe de remplissage de dimensions prédéterminées, si bien que la pointe de bourrage (13) peut être appliquée à la surface périphérique externe de l'anneau de talon (12) et, simultanément, l'organe de remplissage (14) peut être appliqué à la surface périphérique interne de l'anneau de talon (12) et est aussi enroulé autour de l'anneau de talon (12) et de la pointe de bourrage (13).
